# EUROPÄISCHE PATENTANMELDUNG

(11) **EP 1 047 003 A2**
(43) Veröffentlichungstag der Anmeldung: **25.10.2000**
(21) Anmeldenummer: 00106388.2
(22) Anmeldetag: 24.03.2000
(51) Int. Cl.: G06F 17/30

(54) **Verfahren zum Darstellen von Informationen insbesondere im Internet**

(30) Priorität: 06.04.1999 DE 19915190
(71) Anmelder: Tanner, Andreas, 87484 Nesselwang (DE)
(72) Erfinder: Tanner, Andreas, 87484 Nesselwang (DE)
(74) Vertreter: Hutzelmann, Gerhard

(57) **Zusammenfassung**

Verfahren zum Darstellen von Informationen insbesondere im Internet, wobei die Informationen sowie deren Formatierungen aus wenigstens einer Datenbank bezogen werden und wobei die den Informationen zugehörigen Formatierungen entsprechend bei der Darstellung vorgegebener Parameter ausgewählt werden können.

## Beschreibung

Die Erfindung bezieht sich auf ein Verfahren zum Darstellen von Informationen insbesondere im Internet.

Es ist eine Vielzahl verschiedener Verfahren zum Darstellen von Informationen bekannt, die jedoch alle den Nachteil aufweisen, jeweils nur mit erheblichen Aufwand an die jeweils gewünschte Darstellungsform anpassbar zu sein. Insbesondere kann mit den bisher bekannten Verfahren keine unterschiedliche Darstellungsform für unterschiedliche Internet-Adressen realisiert werden, die jedoch immer auf denselben Informationen desselben Servers basieren.

Der Erfindung liegt die Aufgabe zugrunde, ein Verfahren vorzuschlagen, welches flexibel auf einerseits unterschiedliche Aufgabenstellungen und andererseits unterschiedliche Zugangsarten, insbesondere die unterschiedliche Adressierung einer Internet-Seite angepaßt werden kann.

Diese Aufgabe wird erfindungsgemäß dadurch gelöst, daß die Informationen sowie deren Formatierungen aus wenigstens einer Datenbank bezogen werden.

Dadurch ist die Auswahl verschiedener Formatierungsmöglichkeiten zu einer bestimmten Information möglich.

Sehr vorteilhaft ist es dabei, wenn die den Informationen zugehörigen Formatierungen entsprechend bei der Darstellung vorgegebener Parameter ausgewählt werden.

Hiermit kann die Formatierung in Abhängigkeit verschiedener Parameter angepaßt werden.

Sehr vorteilhaft ist es dabei auch, wenn die Parameter durch eine von einem Benutzer angefragte Internetadresse bestimmt werden.

Damit ist ein jeweils individuelles Erscheinungsbild der Internet-Seite bei Anfragen an unterschiedliche Internet-Adressen sichergestellt.

Äußerst vorteilhaft ist es aber auch, wenn die Parameter entsprechend der jeweilig durchzuführenden Datenbankanfrage bestimmt sind.

Hierdurch wird das Erscheinungsbild der darzustellenden Informationen, sei es auf einem Bildschirm oder auf Papier, entsprechend der jeweiligen Datenbankanfrage, respektive Aufgabe beeinflußt.

Erfindungsgemäß ist es aber auch sehr vorteilhaft, wenn die Datenbank nach wenigstens einem Kriterium durchsuchbar ist.

Dadurch ist sichergestellt, daß Datensätze aus der Datenbank anhand eines Suchkriteriums extrahierbar sind.

Sehr vorteilhaft ist es dabei, wenn die Ergebnisse der Suche als Liste ausgegeben werden.

Gemäß einer Weiterbildung der Erfindung ist es äußerst vorteilhaft, wenn die einzelnen Datensätze der Datenbank mit wenigstens einer Markierungsliste verknüpfbar sind.

Hierdurch können bestimmte Datensätze für weiterfolgende Bearbeitung bzw. Auswertung markiert werden. Insbesondere wenn die Datensätze einer Ergebnisliste einer Suche selektiert werden, sind verschiedenste Weiterverwendungen der Datensätze denkbar.

Sehr vorteilhaft ist es auch, wenn entsprechend bestimmter in den markierten Datensätzen enthaltener Informationen verschiedene weitere Vorgehensweisen bei der Ausgabe der markierten Datensätze Anwendung finden.

Dabei ist es äußerst vorteilhaft, wenn aus bestimmten, in den markierten Datensätzen enthaltenen Informationen Ausgaben generiert werden.

Vorteilhaft ist es dabei, wenn diese Ausgaben ausdruckbar sind.

Sehr vorteilhaft ist es dabei auch, wenn die Ausgaben per e-mail oder per Fax versendbar sind.

Besonders vorteilhaft ist es in diesem Zusammenhang auch, wenn die Ausgabe entsprechend einer in dem jeweiligen Datensatz enthaltenen Information ausgedruckt, per Fax oder per e-mail versandt wird.

Durch all diese verschiedenen Vorgehensweisen bei der Weiterverarbeitung von bestimmten, markierten Datensätzen ist es unter anderem möglich zuerst eine Datenbank nach bestimmten Kriterien z.B. nach Kriterien eines Hotels zu durchsuchen, sich dann diese gefundenen Hotels anzusehen und aus der angebotenen Liste bestimmte Hotels für weitere Erkundigungen auszuwählen. Dann werden entsprechend den in der Datenbank hinterlegten Informationen Anfragen an die Hotels generiert, die entsprechend der kommunikationstechnischen Ausstattung der Hotels per e-mail per Fax oder per Post an das jeweilige Hotel versandt werden können.

Gemäß einer weiteren Fortbildung der Erfindung ist es sehr vorteilhaft, wenn die in einer Anfrage an die Datenbank verwendbaren Kriterien bestimmbar sind.

Dabei ist es vorteilhaft, wenn die verwendbaren Suchkriterien durch die angefragte Internetadresse bestimmt sind.

Sehr vorteilhaft ist es dabei auch, wenn die verwendbaren Suchkriterien durch die jeweilige Aufgabenstellung bestimmt sind.

Durch die Bestimmbarkeit der in einer Anfrage verwendbaren Suchkriterien ist es natürlich bei Vorliegen aller Kriterien in der Datenbank möglich, zuerst eine grobe Suche durchzuführen und die Suchkriterien dann bei jedem Schritt zu verfeinern, was zur Folge hat, daß in den meisten Fällen die Anzahl der Treffer eingeschränkt wird. Zudem besteht hierdurch die Möglichkeit, Suchanfragen individuell auf bestimmte bei der Suchanfrage zu berücksichtigende Erfordernisse abzustimmen.

Sehr vorteilhaft ist es gemäß einer Weiterbildung der Erfindung, wenn die Inhalte der Datensätze über eine standardisierte Eingabemaske veränderbar sind.

Dadurch ist sichergestellt, daß die notwendigen Informationen innerhalb der Datensätze der Datenbank auch von ungeübten Benutzern in der gewünschten und notwendigen Form eingegeben werden. Zudem wird verhindert, daß wichtige Informationen weggelassen werden können. Weiterhin können damit zu jedem Eingabefeld Hilfestellungen für den Benutzer gegeben werden.

Dabei hat es sich als sehr vorteilhaft erwiesen, wenn die Inhalte der Datensätze über Internet veränderbar sind.

Hierdurch wird die Eingabe von Daten in Datensätze nochmals vereinfacht, da der jeweilige Benutzer dies von jedem Ort der Welt erledigen kann, von dem aus ein Internet-Zugang besteht.

Gemäß einer Weiterbildung der Erfindung ist es äußerst vorteilhaft, wenn dieses Verfahren für ein Auskunfts- und/oder Reservierungssystem einsetzbar ist.

Dabei ist es sehr vorteilhaft, wenn das Verfahren für ein System im Bereich des Fremdenverkehrs einsetzbar ist.

Weiterhin ist es vorteilhaft, wenn dieses Verfahren als Hotelauskunfts- und/oder Reservierungssystem einsetzbar ist.

Damit ist es möglich Auskunfts- und/oder Reservierungssysteme, insbesondere für Hotels zu erstellen, die eine besonders einfache Bedienung sicherstellen. Zudem kann auf die unterschiedlichen kommunikationstechnischen Gegebenheiten der verschiedenen Anbieter eingegangen werden, indem die Anfragen und/oder Reservierungen entsprechend diesen Gegebenheiten an die Anbieter übermittelt werden.

Gemäß einer weiteren Ausgestaltung der Erfindung ist es sehr vorteilhaft, wenn das System zur Präsentation bestimmter Daten nutzbar ist.

Hiermit ist unter anderem die Präsentation von Wandermöglichkeiten, Kulturstätten, usw. für mehrere Orte möglich. Bei der Präsentation von Wandermöglichkeiten ist durchaus auch die Ausgabe einer Wanderkarte und einer Wegbeschreibung denkbar, die ebenfalls individuell formatiert sein kann.

Die Erfindung wird anhand eines Ausführungsbeispiels veranschaulicht.

Die Erfindung betrifft ein Verfahren zum Darstellen von Informationen insbesondere im Internet, wobei verschiedenste Formatierungsinformationen in einer Datenbank gespeichert sind, die aufgrund wenigstens eines Parameters den darzustellenden Informationen zugeordnet werden und so das Layout der darzustellenden Informationen bilden. Bei den darzustellenden Informationen handelt es sich in diesem Beispiel um Daten zu verschiedensten Gastgebern in Ferienorten. Diese Daten umfassen unter anderem Informationen zu Größe des Gastgebers, Zimmerausstattung, Lage, Preise und sonstige Angebote. Zudem enthalten die einzelnen Datensätze auch Informationen über die für diesen Datensatz anzuwendenden Formatierungsinformationen.

Auf diese Datensätze kann auf mehreren Wegen zugegriffen werden. Einerseits können Zugriffe auf die Daten eines Gastgebers über dessen eigene, private Internet-Adresse erfolgen, wohingegen auch Zugriffe auf die Daten des Gastgebers über eine Informationsseite des Ferienortes oder gar der gesamten Region möglich sein sollen.

Bei Besuch der individuellen Internet-Adresse des Gastgebers sollen dessen präsentierte Informationen ein eigenständiges Layout aufweisen. Andererseits sollen sich die auf der Informationsseite des Ferienortes oder der Region eingebundenen Daten der Gastgeber in das Layout der Informationsseite einfügen. Werden nun für den privaten Internet-Auftritt des Gastgebers in der Datenbank gespeicherte individuelle Formatierungsinformationen verwendet, so werden für den Auftritt jeden Gastgebers auf der Informationsseite des Ferienortes die Formatierungsinformationen des Ferienortes angewendet. Die Auswahl der Formatierungsinformationen ist also von der durch den Benutzer besuchten Internet-Adresse abhängig.

Über die in der Datenbank gespeicherten verschiedenartigsten Kriterien steht den Benutzern die Möglichkeit offen, nach Gastgebern zu suchen, die bestimmte von ihnen gewünschte Kriterien erfüllen. Dabei kann die den Benutzern zur Verfügung stehende Auswahl an durchsuchbaren Kriterien in Abhängigkeit von der gerade besuchten Internetadresse eingeschränkt oder verändert werden. So können auf einfachste Weise Informationsseiten geschaffen werden, die bestimmte Schwerpunkte wie naturnaher Urlaub, Erlebnisurlaub oder dergleichen setzen. Sinnvoll ist in diesem Zusammenhang auch eine Beschränkung der Suche auf bestimmte Ferienorte in Abhängigkeit der besuchten Informationsseite.

Die Suchergebnisse werden als Liste ausgegeben. Der jeweilige Benutzer kann diese Liste durchgehen und verschiedene ihm zusagende Gastgeber auswählen, die dann mit Hilfe einer Markierungsliste selektiert werden. Das System stellt dann in Abhängigkeit von der kommunikationstechnischen Ausstattung der Gastgeber Anfragen an die Gastgeber zusammen. Anfragen an Gastgeber mit e-mail-Adresse werden per e-mail versendet. Besitzt ein Gastgeber keine e-mail-Adresse, sondern nur ein Faxgerät wird mit Hilfe eines Fax-Gateways die Anfrage des Benutzers dem Gastgeber per Telefax zugesandt. Besitzt der Gastgeber weder eine e-mail-Adresse noch Telefax, kann der Benutzer nochmals auswählen, ob ihm eine Liste der nicht elektronisch erreichbaren Gastgeber mit deren Telefonnummern ausgegeben werden soll, oder ob gleich fertige Anschreiben an diese Gastgeber ausgedruckt oder diese Gastgeber ignoriert werden sollen. Die ausgedruckten Anschreiben müssen dann nur noch kuvertiert und mit einem Postwertzeichen versehen werden.

Die Eingabe der Daten der Gastgeber erfolgt über eine standardisierte Eingabemaske, in der einerseits notwendige Einträge hervorgehoben werden können, sowie Hilfsinformationen zu den einzutragenden Informationen gegeben werden können. Diese Eingabemaske ist über eine speziell geschützte Internet-Seite erreichbar, wodurch die Gastgeber von ihrem Büro aus die in der Datenbank hinterlegten Daten jederzeit aktualisieren können.

Mit diesem Verfahren ist auch die Realisierung eines Zimmerreservierungssystems denkbar, wobei diejenigen Gastgeber, deren Zimmer über das System reservierbar sind über einen Internet-Anschluß verfügen sollten, da nur so gewährleistet werden kann, daß die Buchungsinformationen im System immer auf dem aktuellen Stand gehalten werden.

Ebenfalls denkbar ist, daß in der Datenbank auch Formatierungsinformationen hinterlegt werden, die das Layout für Prospekte des Ferienortes oder der einzelnen Gastgeber enthalten. Es ist somit möglich jederzeit mit aktuellen Daten Prospekte zu erstellen und diese eventuell per Telefax oder e-mail an mögliche Interessenten zu versenden.

Weitere Anwendungsmöglichkeit dieses durch das Verfahren gebildeten Systems sind Bereitstellung von Informationen zu Ausflugszielen, Bergwanderungen oder Radtouren, wobei sogar Wanderführer generiert werden können, Informationen zu Pauschalangeboten oder Erstellung von Veranstaltungskalendern.

## Patentansprüche

1. Verfahren zum Darstellen von Informationen insbesondere im Internet, **dadurch gekennzeichnet**, daß die Informationen sowie deren Formatierungen aus wenigstens einer Datenbank bezogen werden.

2. Verfahren nach Anspruch 1, **dadurch gekennzeichnet**, daß die den Informationen zugehörigen Formatierungen entsprechend bei der Darstellung vorgegebener Parameter ausgewählt werden.

3. Verfahren nach Anspruch 2, **dadurch gekennzeichnet**, daß die Parameter durch eine von einem Benutzer angefragte Internetadresse bestimmt werden.

4. Verfahren nach Anspruch 2 oder 3, **dadurch gekennzeichnet**, daß die Parameter entsprechend der jeweilig durchzuführenden Datenbankanfrage bestimmt sind.

5. Verfahren nach einem der vorangehenden Ansprüche, **dadurch gekennzeichnet**, daß die Datenbank nach wenigstens einem Kriterium durchsuchbar ist.

6. Verfahren nach Anspruch 5, **dadurch gekennzeichnet**, daß die Ergebnisse der Suche als Liste ausgegeben werden.

7. Verfahren nach einem der vorangehenden Ansprüche, **dadurch gekennzeichnet**, daß die einzelnen Datensätze der Datenbank mit wenigstens einer Markierungsliste verknüpfbar sind.

8. Verfahren nach Anspruch 7, **dadurch gekennzeichnet**, daß entsprechend bestimmter in den markierten Datensätzen enthaltener Informationen verschiedene weitere Vorgehensweisen bei der Ausgabe der markierten Datensätze Anwendung finden.

9. Verfahren nach Anspruch 7 oder 8, **dadurch gekennzeichnet**, daß aus bestimmten, in den markierten Datensätzen enthaltenen Informationen Ausgaben generiert werden.

10. Verfahren nach einem der Ansprüche 7 bis 9, **dadurch gekennzeichnet**, daß diese Ausgaben ausdruckbar sind.

11. Verfahren nach einem der Ansprüche 7 bis 10, **dadurch gekennzeichnet**, daß die Ausgaben per e-mail oder Fax versendbar sind.

12. Verfahren nach Anspruch 10 oder 11, **dadurch gekennzeichnet**, daß die Ausgabe entsprechend einer in dem jeweiligen Datensatz enthaltenen Information ausgedruckt, per Fax oder e-mail versandt wird.

13. Verfahren nach einem der vorangehenden Ansprüche, **dadurch gekennzeichnet**, daß die in einer Anfrage an die Datenbank verwendbaren Kriterien bestimmbar sind.

14. Verfahren nach Anspruch 13, **dadurch gekennzeichnet**, daß die verwendbaren Suchkriterien durch die angefragte Internetadresse bestimmt sind.

15. Verfahren nach Anspruch 13 oder 14, **dadurch gekennzeichnet**, daß die verwendbaren Suchkriterien durch die jeweilige Aufgabenstellung bestimmt sind.

16. Verfahren nach einem der vorangehenden Ansprüche, **dadurch gekennzeichnet**, daß die Inhalte der Datensätze über eine standardisierte Eingabemaske veränderbar sind.

17. Verfahren nach einem der vorangehenden Ansprüche, **dadurch gekennzeichnet**, daß die Inhalte der Datensätze über Internet veränderbar sind.

18. Verfahren nach einem der vorangehenden Ansprüche, **dadurch gekennzeichnet**, daß dieses Verfahren für ein Auskunfts- und/oder Reservierungssystem einsetzbar ist.

19. Verfahren nach Anspruch 18, **dadurch gekennzeichnet**, daß das Verfahren für ein System im Bereich des Fremdenverkehrs einsetzbar ist.

20. Verfahren nach Anspruch 19, **dadurch gekennzeichnet**, daß dieses Verfahren als Hotelauskunfts- und/oder Reservierungssystem einsetzbar ist.

21. Verfahren nach einem der Ansprüche 18 bis 20, **dadurch gekennzeichnet**, daß das System zur Präsentation bestimmter Daten nutzbar ist.
